(19) **Europäisches Patentamt / European Patent Office / Office européen des brevets**

(11) **EP 3 126 400 B1**

(12) # EUROPÄISCHE PATENTSCHRIFT

(45) Veröffentlichungstag und Bekanntmachung des Hinweises auf die Patenterteilung:
**21.03.2018 Patentblatt 2018/12**

(21) Anmeldenummer: **15713856.1**

(22) Anmeldetag: **26.03.2015**

(51) Int Cl.:
*C08F 265/04* (2006.01)  *C08F 2/00* (2006.01)
*C08F 2/26* (2006.01)  *C08L 25/12* (2006.01)
*C08L 51/04* (2006.01)

(86) Internationale Anmeldenummer:
**PCT/EP2015/056570**

(87) Internationale Veröffentlichungsnummer:
**WO 2015/150223 (08.10.2015 Gazette 2015/40)**

(54) **VERFAHREN ZUR HERSTELLUNG VON ACRYLAT-KAUTSCHUK MIT REDUZIERTER KOAGULATBILDUNG**

PROCESS FOR PRODUCING ACRYLATE RUBBER WITH REDUCED COAGULATE FORMATION

PROCÉDÉ DE PRODUCTION DE CAOUTCHOUC ACRYLATE À FORMATION DE COAGULATS RÉDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2014 EP 14162554**

(43) Veröffentlichungstag der Anmeldung:
**08.02.2017 Patentblatt 2017/06**

(73) Patentinhaber: **INEOS Styrolution Group GmbH 60325 Frankfurt (DE)**

(72) Erfinder:
• **BÖCKMANN, Philipp**
**67098 Bad Dürkheim (DE)**

• **FISCHER, Wolfgang**
**69190 Walldorf (DE)**
• **HAUSSER, Hans-Jürgen**
**67659 Kaiserslautern (DE)**

(74) Vertreter: **Jacobi, Markus Alexander**
**Isenbruck Bösl Hörschler LLP**
**Eastsite One**
**Seckenheimer Landstrasse 4**
**68163 Mannheim (DE)**

(56) Entgegenhaltungen:
EP-A2- 0 139 971  US-A- 4 634 734
US-A- 6 054 531  US-B1- 6 177 517

EP 3 126 400 B1

**Beschreibung**

Die vorliegende Erfindung betrifft ein optimiertes Herstellungsverfahren für Acrylat-Kautschuke. Das Verfahren erfolgt durch Emulsionspolymerisation und kann durch den Einsatz eines verbesserten Puffersystems bei der Pfropfcopolymer-Herstellung optimiert werden. Damit können Koagulatbildung und Ablagerungen im Reaktionskessel signifikant reduziert und dadurch die Ausbeute und Reinheit der Produkte gesteigert werden.

Die Herstellung von Copolymeren aus Styrol- und Nitril-Monomeren (Hartkomponente) ist dem Fachmann bekannt. So wird die Herstellung von Styrol-Acrylnitril-Copolymeren (SAN) in US 8440764 (Styrolution) sowie im Kunststoff-Handbuch (Vieweg-Daumiller, Band V Polystyrol, Carl-Hanser-Verlag, München, 1969, Seite 124, Zeile 12 ff.) beschrieben.

Die Herstellung von Pfropf-Copolymeren unter Einsatz eines Kautschuks wird in EP-A 0450485, DE 19503545 und DE 3149358 offenbart. Die Herstellung von Styrol-Acrylnitril-Copolymer-Formmassen mit mindestens einem Acrylat-Kautschuk wird in US 2011/0275763 vorgestellt. WO 2007/142473 beschreibt Acrynitril-Styrol-AcrylatCopolymere (ASA) und deren Einsatz in thermoplastischen Zusammensetzungen.

EP 0 139 971 A2 offenbart die Herstellung einer thermoplastische Formmasse aus einem elastomeren Polymerisat A, und einer auf das elastomere Polymerisat A aufgepfropften Hülle B, die vinylaromatisches Monomeres $b_1$) und Acrylnitril $b_2$) enthält, sowie einem Copolymerisat C, aufgebaut aus einem vinylaromatischen Monomeren und einem nichtaromatischen, ethylenisch ungesättigten Monomeren. Das elastomere Polymerisat A ist aus 40 bis 70 Gew.% eines Alkylacrylats und 30 bis 60 Gew.% Butadien aufgebaut und die Herstellung der Pfropfhülle B erfolgt in zwei Stufen, wobei man in der ersten Stufe 20 bis 70 Gew.% der Monomeren $b_1$) und in der zweiten Stufe 30 bis 80 Gew.% eines Gemisches der Monomeren b,) und $b_2$) im Gewichtsverhältnis 90 : 10 bis 60 : 40 anwendet.

Die Auswirkungen verschiedener Parameter auf die Koagulat-Bildung in der VorEmulsion bei der Herstellung von Acrylkautschuken werden von Palma et al. (Indian J. Chem. Technol. 2007, 14(5), 515) beschrieben. Es wird dargestellt, dass die Koagulat-Bildung bei einer Monomer-Zugabe bis zu vier Stunden leicht abnimmt, wohingegen bei einer Monomer-Zugabe über sechs Stunden die Koagulatbildung dramatisch zunimmt.

Zubitur et al. (Polymer 2001, 42(14), 5979) untersuchten die Effekte der Rührstufe, zeitlichen Monomer-Zugabe, Initiationsrate und der Kautschuk-Viskosität auf die Koagulatbildung bei der Emulsionspolymerisation von Styrol und Butylacrylat. Die Untersuchungen zeigen, dass unter thermaler Initiation eine langsamere unmittelbare Monomer-Umsetzung stattfindet und eine Mindest-Rührstufe verwendet werden muss, um eine Koagulatbildung zu vermeiden.

Die Redox-Initiation verläuft hingegen rascher, weshalb die Rührstufe eine noch wichtigere Rolle einnimmt, um eine Koagulatbildung zu verhindern. Daneben wird gezeigt, dass die Koagulatbildung mit der Viskosität der Reaktionsmischung zunimmt.

Die Einstellung der Reaktionsparameter ist im industriellen Maßstab oftmals nicht zufriedenstellend und kann mit ungewünschten Nebenreaktionen einhergehen. Somit besteht ein Bedarf für ein optimiertes Verfahren zu Herstellung von thermoplastischen Formmassen mit Acrylkautschuken mit geringer Koagulat-Bildung.

Ein Gegenstand der vorliegenden Erfindung ist ein optimierter Herstellungsprozess, um Acrylkautschuke mit geringer Koagulatbildung sowie einer Reduktion von Ablagerungen und Belag im Reaktionskessel zu erhalten. Bei dieser Herstellung des Pfropfcopolymers (insbesondere ASA) bzw. der Pfropfcopolymere erfolgt die Polymerisation unter Einsatz eines Initiators, oftmals des Initiators Kaliumperoxodisulfat (KPS).

Die Erfindung betrifft ein Verfahren zur Herstellung einer thermoplastischen Formmasse, enthaltend folgende Komponenten

10 bis 40 Gew.-%, oftmals 20 bis 39,9 Gew.-% mindestens eines Pfropfcopolymers A, enthaltend
50 bis 70 Gew.-%, bezogen auf A, einer Pfropfgrundlage A1 aus einem elastomeren, vernetzten Acrylester-Polymer und
30 bis 50 Gew.-%, bezogen auf A, einer Pfropfhülle A2 aus einem vinylaromatischen Monomer und einem polaren, copolymerisierbaren, ethylenisch ungesättigten Monomeren, im Gewichtsverhältnis 80 : 20 bis 65 : 35,
50 bis 90 Gew.-%, oftmals 60 bis 89,9 Gew.-% einer Hartmatrix B aus einem oder mehreren Copolymeren von Styrol, $\alpha$-Methylstyrol, Acrylnitril, Methylmethacrylat und/oder Phenylmaleinimid,
0 bis 50 Gew.-% eines weiteren, zum Pfropfcopolymer A unterschiedlichen Pfropfcopolymers C mit einem mittleren Teilchendurchmesser (Gewichtsmittel) im Bereich von 200 bis 800 nm, enthaltend
50 bis 80 Gew.-%, bezogen auf C, eines von A1 verschiedenen, elastomeren vernetzten Acrylester-Polymers C1,
2,5 bis 25 Gew.-%, oftmals 5 bis 25 Gew.-%, bezogen auf C, einer ersten Pfropfhülle C2 aus einem vinylaromatischen Monomeren und aus 10 bis 45 Gew.-%, oftmals 15 bis 40 Gew.-%, bezogen auf C, einer zweiten Pfropfhülle C3 aus einer Mischung aus einem vinylaromatischen Monomeren C31 und einem polaren, copolymerisierbaren, ethylenisch ungesättigten Monomeren C32 im Gewichtsverhältnis von C31 zu C32 von 90 : 10 bis 60 : 40 und
0 bis 15 Gew.-%, oftmals 0,1 bis 5 Gew.-%, eines oder mehrerer Additive D,

wobei die Summe aus A und B, und gegebenenfalls C und D, 100 Gew.-% ergibt, und wobei die Reaktion zur Herstellung des Acrylester-Polymers A, und die Reaktion zur Herstellung des Copolymers C, in Gegenwart einer 0,01 bis 4-fach molaren Menge an Natriumcarbonat, bezogen auf die Summe der bei der Herstellung der Pfropfgrundlage und Pfropfhülle eingesetzten molaren Menge an Initiator, insbesondere KPS, durchgeführt wird.

Die Menge des eingesetzten Initiators (insbesondere KPS) beträgt bei jedem der Polymerisationsschritte in der Regel von 0,05 bis 1,2 Gew.-%, insbesondere von 0,1 bis 0,6 Gew.-%, bezogen auf das Gewicht der eingesetzten Monomere.

Über den Zeitpunkt und die Menge an zugegebenem Natriumcarbonat kann bei der Herstellung der Pfropfpolymere A und C die gewünschte Teilchengröße des Pfropfcopolymers eingestellt werden.

Ein bevorzugter Gegenstand der Erfindung ist ein Verfahren, bei dem die Pfropfgrundlage A1 zu 55 bis 65 Gew.-%, bezogen auf A, aus Acrylester-Polymer-Partikeln mit einer mittleren Teilchengröße bzw. Teilchendurchmesser (Gewichtsmittel) von 50 bis 120 nm, und die Pfropfhülle A2 aus 35 bis 45 Gew.-%, bezogen auf A, aus Styrol und Acrylnitril besteht.

Gegenstand ist auch ein Verfahren zur Herstellung einer thermoplastischen Formmasse, wobei das Natriumcarbonat bei der Herstellung der Pfropfcopolymere A und/oder C in einer Menge von 0,01 bis 2,5 Mol, bezogen auf die Summe der molaren Mengen der in der Pfropfgrundlage und Pfropfhülle eingesetzten Menge an Initiator, insbesondere KPS, verwendet wird.

Gegenstand ist auch ein Verfahren zur Herstellung einer thermoplastischen Formmasse, wobei die Teilchengrößenverteilung der Pfropfgrundlage A1 im Bereich von Q = 0,01 bis 0,5, insbesondere Q = 0,1 bis 0,4 beträgt.

Gegenstand ist auch ein Verfahren zur Herstellung einer thermoplastischen Formmasse, wobei die Teilchengröße (der mittlere Teilchendurchmesser) der Partikel nach der Pfropf-Reaktion im Bereich von 70 bis 150 nm liegt.

Gegenstand ist auch ein Verfahren zur Herstellung einer thermoplastischen Formmasse, wobei die entsprechende Menge an Natriumcarbonat zunächst in einer Vorlage gelöst und dann zur Polymerisation zugeführt wird.

Gegenstand ist auch ein Verfahren zur Herstellung einer thermoplastischen Formmasse, wobei die Koagulatbildung der Pfropfhülle A2 in einem Bereich zwischen 0,01 bis 0,5 Gew.-%, bezogen auf die Menge des Pfropfcopolymers A, liegt.

Gegenstand ist auch ein Verfahren zur Herstellung einer thermoplastischen Formmasse, wobei während der Pfropfcopolymerisation (Herstellung von A und C) eine Natriumcarbonat-Lösung zusammen mit einer KPS-Lösung, vorzugsweise kontinuierlich, zugegeben wird.

Die Erfindung betrifft auch die Verwendung der erhaltenen thermoplastischen Formmasse zur Herstellung von Formkörpern, Folien oder Beschichtungen.

Gegenstand sind auch Formkörper, Folien und Beschichtungen aus thermoplastischen Formmassen, hergestellt nach einem Verfahren, wie beschrieben.

Die Erfindung betrifft auch ein Verfahren, bei dem die Teilchengrößenverteilung der Pfropfcopolymer-Teilchen Q = 0,1 bis 0,4 beträgt und die mittlere Teilchengröße nach der Pfropf-Reaktion im Bereich von 50 bis 150 nm liegt.

Die Erfindung betrifft bevorzugt ein Verfahren unter zusätzlichem Einsatz einer großteiligen Komponente C, bei der die mittlere Teilchengröße nach der Pfropf-Reaktion im Bereich von 300 bis 700 nm liegt.

Ein weiterer Aspekt der Erfindung ist auch ein Verfahren zur Herstellung einer thermoplastischen Formmasse, die enthält:

50 bis 90 Gew.-%, oftmals 60 bis 79,9 Gew.-% einer Hartmatrix B, aus einem oder mehreren Copolymeren von Styrol, $\alpha$-Methylstyrol, Acrylnitril, Methylmethacrylat und/oder Phenylmaleinimid,
10 bis 50 Gew.-%, oftmals 20 bis 39,9 Gew.-% eines Pfropfcopolymers C mit einer mittleren Teilchengröße (Gewichtsmittel) im Bereich von 200 bis 800 nm, enthaltend 50 bis 80 Gew.-%, bezogen auf C, eines elastomeren vernetzten Acrylester-Polymers C1,
2,5 bis 25 Gew.-%, bezogen auf C einer ersten Pfropfhülle C2 aus einem vinylaromatischen Monomeren und aus 10 bis 45 Gew.-%, bezogen auf C, einer zweiten Pfropfhülle C3 einer Mischung aus einem vinylaromatischen Monomeren C31 und einem polaren, copolymerisierbaren, ethylenisch ungesättigten Monomeren C32 im Gewichtsverhältnis von C31 zu C32 von 90 : 10 bis 60 : 40 und
0 bis 15 Gew.-%, oftmals 0 bis 5 Gew.-%, häufig 0,1 bis 5 Gew.-% eines oder mehrerer Additive D,

wobei die Summe aus B und C, und gegebenenfalls D 100 Gew.-% ergibt, und wobei die Reaktion zur Herstellung des Acrylester-Polymers C in Gegenwart einer 0,01 bis 4-fach molaren Menge Natriumcarbonat, bezogen auf die Summe der bei der Herstellung der Pfropfgrundlage und Pfropfhülle eingesetzten molaren Menge an Initiator, insbesondere KPS, durchgeführt wird. Auch die entsprechenden Formmassen und deren Verwendung sind Gegenstand der Erfindung.

Bei diesem Verfahren zur Herstellung einer thermoplastischen Formmasse kann vorzugsweise die Koagulat-Bildung der Pfropfhülle von Komponente C in einem Bereich zwischen 0,01 bis 0,5 Gew.-%, bezogen auf das Gesamtgewicht des Pfropfcopolymers C, gehalten werden. Auch die o.g. bevorzugten Ausführungsformen sind für dieses weitere Herstellungsverfahren anwendbar. Auch Gegenstand ist die Verwendung und die aus der thermoplastischen Polymerzusammensetzung erhaltenen Formkörper, Folien und Beschichtungen.

Komponente A

Die thermoplastischen Zusammensetzungen bzw. Formmassen enthalten vorzugsweise 10 bis 40 Gew.-%, oftmals 20 bis 39,9 Gew.-% (bezogen auf die Summer aller Komponenten) eines Pfropfcopolymers A. Komponente A ist ein Pfropfcopolymer, aufgebaut aus einem elastomeren, vernetzten Acrylester-Polymer A1 als Pfropfgrundlage und (mindestens) einer Pfropfhülle A2.

Als Komponente A1 kann ein Acrylsäureester mit 1 bis 8 Kohlenstoffatomen, vorzugsweise 4 bis 8 Kohlenstoffatomen im Alkylrest, eingesetzt werden. Besonders bevorzugt werden die Acrylsäurealkylester Acrylsäure-n-butylester und Acrylsäureethylhexylester verwendet. Die Acrylsäureester können bei der Herstellung der als Pfropfgrundlage dienenden Acrylsäureester-Polymere allein oder auch in Mischung miteinander eingesetzt werden. Komponente A1 wird mit einer Menge von 50 bis 70, vorzugsweise von 55 bis 65, besonders bevorzugt von 58 bis 65 Gew.-%, bezogen auf Komponente A eingesetzt.

Um eine Vernetzung der Acrylsäureester-Polymere A1 zu erhalten, wird die Polymerisation in Gegenwart von 0,1 bis 5 Gew.-%, vorzugsweise 0,5 bis 3 Gew.-%, bezogen auf die bei der Herstellung der Pfropfgrundlage eingesetzten gesamten Monomeren, eines copolymerisierbaren, mehrfunktionellen, die Vernetzung bewirkenden Monomeren durchgeführt.

Als solche mehrfunktionellen Vernetzungs-Monomeren eignen sich Monomere, die vorzugsweise zwei, gegebenenfalls auch mehr zur Copolymerisation befähigte ethylenische Doppelbindungen enthalten, die nicht in 1,3-Stellung konjugiert sind. Geeignete Monomere sind beispielsweise Divinylbenzol, Diallylmaleat, Diallylfumarat oder Diallylphthalat. Als günstig hat sich der Acrylsäureester des Tricyclodecenylalkohols erwiesen (vgl. DE 1 260 935, die auch für die nachstehend beschriebene Herstellung Hinweise gibt), auch Dihydrodicyclopentadienylacrylat (DCPA) genannt.

Zunächst wird die Pfropfgrundlage A1 hergestellt, indem der oder die Acrylsäureester und das vernetzende Monomere, gegebenenfalls zusammen mit weiteren Comonomeren, in wässriger Emulsion in an sich bekannter Weise polymerisiert werden. Es werden die üblichen Emulgatoren, in Mengen von 0,5 bis 5 Gew.-%, bezogen auf die Monomeren, verwendet. Vorzugsweise nimmt man die Natriumsalze von Alkylsulfonaten oder Fettsäuren mit 10 bis 18 Kohlenstoffatomen. Im Allgemeinen wird bei einem Wasser- zu Monomeren-Verhältnis von 2:1 bis 0,7:1 gearbeitet.

Als Polymerisationsinitiatoren dienen vorzugsweise die gebräuchlichen Persulfate, wie z.B. Kaliumperoxodisulfat (KPS). Es können im Prinzip auch Redox-Systeme zum Einsatz gelangen, dann entspricht die molare Menge an Redoxinitiator der KPS-Menge.

Als weitere Polymerisations-Hilfsstoffe werden erfindungsgemäß die Puffersubstanzen Natriumcarbonat (oder Kaliumcarbonat) und gegebenenfalls Molekulargewichtsregler wie Mercaptane, Terpinole oder dimeres $\alpha$-Methylstyrol verwendet. Ebenfalls sind Pufferlösungen enthaltend Alkalihydroxide wie z.B. Natriumhydroxid oder Kaliumhydroxid zu nennen.

Die Puffersubstanzen (wie Natriumcarbonat) werden in einer 0,01 bis 4-fachen molaren Menge, oftmals 0,05 bis 3-fachen molaren Menge, bezogen auf die Summer der bei der Herstellung der Pfropfgrundlage und Pfropfhülle eingesetzten molaren Menge an Initiator, insbesondere KPS, verwendet. Die Puffersubstanzen können z.B. in einer Menge zwischen 0,01 bis 1 Gew.-%, bezogen auf die Pfropfgrundlage A1, eingesetzt werden.

Die Puffersubstanz kann in Einem zu Beginn der Herstellung der Pfropfgrundlage A1 vorgelegt werden, sie kann auch kontinuierlich und separat während der Pfropfcopolymerisation, kontinuierlich in Kombination mit dem Polymerisationsinitiatoren während der Pfropfcopolymerisation und/oder zu einem späteren Zeitpunkt der Polymerisation zu der Reaktionsmischung zugegeben werden.

Die Pfropfhülle A2 ist aus vinylaromatischen Verbindungen, wie Styrol, $\alpha$-Methylstyrol oder kernalkyliertes Styrol einerseits, und polaren copolymerisierbaren, ethylenisch ungesättigten Monomeren, wie z. B. Acrylnitril, Methacrylsäurealkylester mit 1 bis 4 Kohlenstoffatomen im Alkylrest, Acrylsäure, Maleinsäureanhydrid, Acrylamid oder Vinylmethylether andererseits aufgebaut. Diese Pfropfhülle wird bevorzugt wieder in wässriger Emulsion auf die als Kautschuk (d.h. Emulsion) vorliegende Pfropfgrundlage A1 aufgepfropft. Die Pfropfcopolymerisation kann im gleichen System erfolgen wie die Emulsionspolymerisation zur Herstellung der Pfropfgrundlage, wobei, falls notwendig, weiterer Emulgator, Puffersubstanz und Initiator zugegeben werden kann.

Die Pfropfhülle A2 wird mit einer Menge von 30 bis 50, vorzugsweise von 35 bis 45 Gew.-%, bezogen auf Komponente A eingesetzt. Die vinylaromatische Verbindung (z.B. Styrol) der Pfropfhülle A2 hat zu dem polaren copolymerisierbaren, ethylenisch ungesättigten Monomeren (z.B. Acrylnitril) oftmals ein Gewichtsverhältnis von 80 : 20 bis 65 : 35. Vorzugsweise liegen Styrol und Acrylnitril in einem Verhältnis von etwa 75 : 25 vor. In einer weiteren bevorzugten Ausführungsform liegen Styrol und Acrylnitril in einem Gewichts-Verhältnis von 77 : 23 vor.

Das aufzupfropfende Monomerengemisch kann dem Reaktionsgemisch auf einmal, in mehreren Stufen oder vorzugsweise kontinuierlich während der Polymerisationsreaktion zugegeben werden. Die Pfropfcopolymerisation wird so geführt, dass ein Pfropfgrad von 30 bis 50 %, vorzugsweise von 35 bis 45 %, im Pfropfcopolymer A resultiert. Der Pfropfgrad bezieht sich hierbei auf das Massen-Verhältnis von Pfropfkern zu der Summe aus Pfropfkern und Pfropf-hülle:

$$\text{Pfropfgrad [\%]} = (m(\text{Pfropfhülle}) * 100) / (m(\text{Pfropfgrundlage}) + m(\text{Pfropfhülle})).$$

Komponente B

Die thermoplastischen Zusammensetzungen bzw. Formmassen enthalten 50 bis 90 Gew.-% (bezogen auf die Summe aller Komponenten) mindestens eines Styrol-Copolymeren B. Die Komponente B ist dem Fachmann bekannt und kann über gängige Verfahren, z.B. durch radikalische Polymerisierung, hergestellt werden.

Als Styrolcopolymere können insbesondere SAN oder andere, kautschukfreie Styrol-Copolymere verstanden werden. Beispiele für die Komponente B sind gängige Copolymer-Matrices, wie zum Beispiel durch Massepolymerisation, Emulsions- oder Lösungspolymerisation hergestellte Styrol-Acrylnitril-Copolymere (SAN). Auch Mischungen von Polymer-Matrices, wie z.B. SAN plus PMMA, Polyamid oder Polycarbonat, sind geeignet, wie beispielsweise in Ulmann's Encyclopedia of Industrial Chemistry (VCH-Verlag, 5. Ausgabe, 1992, S. 633 f.) beschrieben.

Besonders bevorzugt umfasst Komponente B als $\alpha,\beta$-ungesättigte Komponente Acrylnitril, sowie Styrol und/oder $\alpha$-Methylstyrol als aromatische vinylische Komponente.

In einer weiteren Ausführungsform der Erfindung wird eine Formmasse hergestellt, die eines oder mehrere Styrol-Copolymere B enthält, wobei dieses Styrol-Copolymer B aus zwei oder drei Monomeren aus der Gruppe Styrol, Acrylnitril und/oder $\alpha$-Methylstyrol aufgebaut ist. Die Hartmatrix B wird vorzugsweise aus den Komponenten Acrylnitril und Styrol und/oder $\alpha$-Methylstyrol durch Massepolymerisation oder in Gegenwart eines oder mehrerer Lösungsmittel hergestellt. Bevorzugt sind dabei Copolymere B mit Molmassen $M_w$ von 15.000 bis 300.000 g/mol, wobei die Molmassen zum Beispiel durch Lichtstreuung in Tetrahydrofuran bestimmt werden können (GPC mit UV-Detektion).

Komponente B wird vorzugsweise mittels Substanzpolymerisation, Emulsionspolymerisation oder Lösungspolymerisation hergestellt. Besonders bevorzugt wird die Polymerisation in Gegenwart von 0 bis 20 Gew.-%, bezogen auf das Gesamt-Gemisch, aromatischen Lösemitteln, wie Toluol, Xylol oder Ethylbenzol durchgeführt. Näheres zu der Herstellung von Komponente B kann auch dem Kunststoff-Handbuch (Vieweg-Daumiller, Band V Polystyrol, Carl-Hanser-Verlag, München, 1969, Seite 124, Zeilen 12 ff.) entnommen werden.

Die Hartmatrix B kann zum Beispiel enthalten:

(Ba) Polystyrolacrylnitril, hergestellt aus, bezogen auf (Ba), 60 bis 85 Gew.-% Styrol und 15 bis 40 Gew.-% Acrylnitril, oder

(Bb) Poly-$\alpha$-Methylstyrolacrylnitril, hergestellt aus, bezogen auf (Bb), 60 bis 85 Gew.-% $\alpha$-Methylstyrol und 15 bis 40 Gew.-% Acrylnitril, oder

(Bc) eine Mischung der Copolymer-Matrix (Ba) und der Copolymer-Matrix (Bb).

Die Copolymer-Matrix B kann auch durch Copolymerisation von Acrylnitril, Styrol und $\alpha$-Methylstyrol gewonnen werden.

Komponente C

Die thermoplastischen Zusammensetzungen bzw. Formmassen enthalten 0 bis 50 Gew.-% (bezogen auf die Summer aller Komponenten) eines Pfropfcopolymers C. Komponente C ist ein Pfropfcopolymer, aufgebaut aus mindestens einem elastomeren vernetzten Acrylester-Polymer C1 als Pfropfgrundlage und mindestens zwei Pfropfhüllen C2 und C3. Als Pfropfgrundlage C1 für die Herstellung des zweiten Pfropfcopolymers C wird ebenfalls ein vernetztes Acrylsäureester-Polymer eingesetzt. Für die Art und Weise der Herstellung der Pfropfgrundlage C1 gilt das bei Komponente A gesagte.

Zum Unterschied zu dem Pfropfcopolymer A, soll das Pfropfcopolymer C großteilig sein, nämlich einen mittleren Teilchendurchmesser bzw. mittlere Teilchengröße (Gewichtsmittel) im Bereich von etwa 200 bis 800 nm, vorzugsweise im Bereich von 300 bis 700 nm aufweisen. Es ist erstrebenswert, wenn dieses großteilige Pfropfcopolymer C eine enge Teilchengrößenverteilung aufweist, wobei es günstig ist, wenn der Quotient $Q = (d_{90}-d_{10}) / d_{50}$ kleiner als 0,3, vorzugsweise kleiner als 0,2 ist. Als Pfropfgrundlage C1 geeignete großteilige vernetzte Acrylsäureester-Polymere können nach den bekannten Verfahren zur Herstellung großteiliger Dispersionen erhalten werden, zweckmäßig jedoch nach der Saatlatex-Methode, wie sie in der DE 1 911 882 für die Herstellung von ASA-Polymeren beschrieben ist.

Nach dieser Methode wird ein kleinteiliger vernetzter Acrylsäureester-Polymer-Kautschuk (Polymer-Latex) mit einem mittleren Teilchendurchmesser, dessen Teilchendurchmesser also vorzugsweise unter 120 nm liegt und wie beschrieben durch Emulsionspolymerisation von Acrylsäureester, vernetzenden Monomeren sowie gegebenenfalls weiteren Comonomeren erhalten worden ist, durch Zugabe von weiteren Monomeren, Emulgator und gegebenenfalls Puffersubstanz einer weiteren Polymerisation unterworfen. Dabei werden die Bedingungen (vgl. Journal of Applied Polymer Science, Vol. 9 (1965), Seiten 2929 bis 2938) so eingestellt, dass lediglich die vorhandenen Polymerisatpartikel des Saatlatex weiter wachsen, aber keine neuen Latexteilchen gebildet werden. In der Regel wird ein Initiator eingesetzt. Die Teilchengröße des resultierenden großteiligen Kautschuks lässt sich durch Variation des Mengenverhältnisses von Saatlatex zu Monomeren in der gewünschten Weise einstellen.

Zur Herstellung des erfindungsgemäßen zweiten Pfropfcopolymers C wird in Gegenwart des zuvor hergestellten großteiligen Kautschuk C1 zuerst ein vinylaromatisches Monomer, insbesondere Styrol, aber ggf. auch α-Methylstyrol oder ein kernalkyliertes Styrol, wie p-Methylstyrol und tert.-Butylstyrol verwendet.

Die Pfropfcopolymerisation kann zweckmäßig im gleichen System wie die Emulsions-polymerisation zur Herstellung der Pfropfgrundlage A vorgenommen werden; dabei kann weiterer Emulgator, Puffersubstanze und Initiator zugegeben werden.

Das aufzupfropfende Monomere, insbesondere Styrol, kann dem Reaktionsgemisch auf einmal, absatzweise in mehreren Stufen oder vorzugsweise kontinuierlich während der Polymerisation zugegeben werden.

Die Pfropfcopolymerisation wird so geführt, dass ein Pfropfgrad von 2,5 bis 25 Gew.-%, vorzugsweise von 10 bis 20 Gew.-%, im Pfropfcopolymer C resultiert.

In einer zweiten Stufe wird dann die Pfropfcopolymerisation mit einem Monomerengemisch, also mindestens einem vinylaromatischen Monomeren, insbesondere Styrol, und mindestens einem copolymerisierbaren polaren Monomeren, insbesondere Acrylnitril, im Verhältnis von 90 : 10 bis 60 : 40, vorzugsweise 80 : 20 bis 65 : 35 fortgeführt. Beispiele für vinylaromatische Monomere sind bereits bei der Beschreibung der ersten Pfropfstufe genannt. Ein Beispiel für ein polares copolymerisierbares, ethylenisch ungesättigtes Monomer ist Acrylnitril. Außer Acrylnitril kann Methacrylsäurealkylester mit 1 bis 4 Kohlenstoffatomen im Alkylrest, Acrylsäure, Maleinsäureanhydrid, Acrylamid und/oder Vinylmethylether verwendet werden. Bevorzugt ist Acrylnitril, Ethylacrylat, Methylmethacrylat oder deren Gemische. Besonders bevorzugt für die 2. Stufe der Pfropfung werden vor allem Styrol und Acrylnitril, ferner α-Methylstyrol und Acrylnitril sowie Styrol, Acrylnitril und Methylmethacrylat. Auch der zweite Schritt der Pfropfcopolymerisation wird zweckmäßigerweise im vorhandenen System durchgeführt; dabei kann, falls notwendig, weiterer Emulgator und Initiator zugegeben werden. Das aufzupfropfende Monomeren-Gemisch kann wieder auf einmal, absatzweise in mehreren Stufen oder vorzugsweise kontinuierlich zugegeben werden. Die Pfropfcopolymerisation wird so geführt, dass ein Pfropfgrad von 10 bis 45 Gew.-%, vorzugsweise von 15 bis 40 Gew.-%, im Pfropfcopolymer C resultiert.

Komponente D

Als weitere Komponente D enthalten die thermoplastischen Zusammensetzungen gegebenenfalls 0 bis 15 Gew.-%, oftmals 0,1 bis 15 Gew.-%, häufig auch 0,1 bis 5 Gew.-% (bezogen auf die Summer aller Komponenten) eines oder mehrerer, zu den Komponenten A bis C unterschiedlicher Additive (Hilfs- und Zusatzstoffe). Hier sind organische Ester, teilchenförmige mineralische Füllstoffe, Verarbeitungshilfsmittel, Stabilisatoren und Oxidations-Verzögerer, Mittel gegen Wärmezersetzung und Zersetzung durch ultraviolettes Licht, Gleit- und Entformungsmittel, Flammschutzmittel, Farbstoffe und Pigmente und Weichmacher sind zu nennen.

Ester sind als niedermolekulare Verbindungen zu verstehen. Gemäß der vorliegenden Erfindung können auch zwei oder mehr dieser Verbindungen verwendet werden. Im Allgemeinen liegen die Verbindungen mit einem Molgewicht kleiner 3000 g/mol, vorzugsweise kleiner 150 g/mol vor.

Teilchenförmige mineralische Füllstoffe können zum Beispiel durch amorphe Kieselsäure, Carbonate wie Magnesiumcarbonat, Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Kaolin, besonders kalzinierter Kaolin zur Verfügung gestellt werden.

Faserförmige Füllstoffe wie Kohlenstofffasern, Kaliumtitanat-Whisker, Aramidfasern oder bevorzugt Glasfasern können eingesetzt, wobei mindestens 50 Gew.-% der faserförmigen Füllstoffe (Glasfasern) eine Länge von mehr als 50 mm aufweisen. Vorzugsweise weisen mindestens 70 Gew.-% der Glasfasern eine Länge von mehr als 60 μm auf. Die Länge der Glasfasern bezieht sich auf ein fertiges Formteil, das beispielsweise nach dem Spritzgießen erhalten wird. Dabei können die Glasfasern den Formmassen bereits in der entsprechend abgelängten Form oder auch in Form von Endlossträngen (Rovings) zugesetzt werden.

Unter UV-Stabilisatoren fallen beispielsweise verschiedene substituierte Resorcine, Salicylate, Benzotriazole und Benzophenone, die im Allgemeinen in Mengen bis zu 2 Gew.-% eingesetzt werden können.

Erfindungsgemäß können der thermoplastischen Formmasse Oxidationsverzögerer und Wärmestabilisatoren zugesetzt werden. Sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, sind einsetzbar.

Ferner können gemäß der Erfindung Gleit- und Entformungsmittel, die in der Regel in Mengen bis zu 1 Gew.-% der thermoplastischen Masse zugesetzt werden. Zu nennen sind hier Stearinsäure, Stearylalkohol, Stearinsäurealkylester und -amide, vorzugsweise Irganox®, sowie Ester des Pentaerythrits mit langkettigen Fettsäuren. Es können die Calcium-, Zink- oder Aluminiumsalze der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden. Ferner könne natürliche sowie synthetische Wachse verwendet werden. Zu nennen sind PP-Wachse, PE-Wachse, PA-Wachse, gepfropfte PO-Wachse, HDPE-Wachsen, PTFE-Wachse, EBS-Wachse, Montanwachs, Carnauba- und Bienenwachse.

Flammschutzmittel können sowohl halogenhaltige als auch halogenfreie Verbindungen sein. Geeignete Halogenverbindungen, wobei bromierte Verbindungen den chlorierten vorzuziehen sind, bleiben bei der Herstellung und Verarbeitung der erfindungsgemäßen Formmasse stabil, so dass keine korrosiven Gase freigesetzt werden. Bevorzugt werden halogenfreie Verbindungen, wie zum Beispiel Phosphorverbindungen, insbesondere Phosphinoxide und Derivate von Säuren des Phosphors und Salze von Säuren und Säurederivaten des Phosphors, verwendet.

Besonders bevorzugt enthalten Phosphorverbindungen Ester-, Alkyl-, Cycloalkyl- und/oder Aryl-Gruppen. Ebenfalls geeignet sind oligomere Phosphorverbindungen mit einem Molekulargewicht kleiner 2000 g/mol wie zum Beispiel in EP-A 0 363 608 beschrieben.

Ferner können Pigmente und Farbstoffe enthalten sein. Diese sind allgemein in Mengen von 0 bis 15, bevorzugt 0,1 bis 10 und insbesondere 0,5 bis 8 Gew.-% enthalten. Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr, Fe)_2O_4$), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen, da allgemein die Farbdispergierung in den Thermoplasten erleichtert wird.

Das erfindungsgemäße Herstellungsverfahren führt zu Gegenständen mit reduzierter Koagulat- und Belagsbildung im Reaktionskessel, sowie guten mechanischen Eigenschaften im vergleich zum Stand der Technik. Durch die geringe Koagulatbildung kann die Ausbeute signifikant verbessert und eine höhere Reinheit des Produkts erzielt werden. Die erfindungsgemäße Prozessoptimierung verbessert sowohl die Herstellung von kleinteiligen als auch großteiligen Pfropfcopolymeren.

Die allgemeine Herstellung von kleinteiligen (50 bis 150 nm) sowie großteiligen (200 bis 800 nm) Pfropfpolymeren wird in EP-A 0450485 beschrieben.

Butylacrylat wird oftmals zugegeben, wenn eine Lösung aus einem Salz als Polymerisations-Hilfsstoff, bevorzugt Natriumcarbonat oder Kaliumcarbonat, zugegeben wird. Der pH-Wert kann bei der Polymerisation zwischen 6 und 10 eingestellt werden.

Anschließend kann die Polymerisation durchgeführt werden. Im Anschluss kann der erhaltene Kautschuk mit einer Mischung aus Styrol und Acrylnitril gepfropft werden.

Bevorzugt wird zur Herstellung der thermoplastischen Formmasse eine Schmelze des "harten" Copolymers B (z.B. SAN) mit dem Pfropfcopolymer A (hergestellt unter Einsatz von Puffer), und gegebenenfalls mit dem Pfropfcopolymer C und den Additiven D, bei einer Temperatur über 200 °C intensiv vermischt. Alternativ kann das Copolymer B mit dem Pfropfcopolymer C und den Additiven D vermischt werden.

Das Abmischen der Komponenten A und B, gegebenenfalls mit dem Pfropfcopolymer C und den Additiven D (bzw. der Komponenten B, C und D), kann nach allen bekannten Methoden erfolgen. Wenn die Komponenten z. B. durch Emulsions-Polymerisation hergestellt worden sind, ist es z. B. möglich, die erhaltenen Polymer-Dispersionen miteinander zu vermischen, darauf die Polymere gemeinsam auszufällen und das Polymeren-Gemisch aufzuarbeiten. Besonders bevorzugt ist jedoch das Abmischen der Komponenten A und B, und gegebenenfalls des Pfropfcopolymers C und der Additive D, durch gemeinsamen Extrudieren, Kneten oder Verwalzen der Komponenten, wobei die Komponenten notwendigenfalls zuvor aus der bei der Polymerisation erhaltenen Lösung oder wässrigen Dispersion isoliert worden sind. Produkte der Pfropfcopolymerisation (Komponente A und gegebenenfalls C), welche aus wässriger Dispersion erhalten wurden, können auch nur teilweise entwässert und als feuchte Krümel mit der Hartkomponente B (z.B.

SAN) vermischt werden. Es ist jedoch zu Beachten, dass bei der Vermischung die vollständige Trocknung der Pfropfcopolymere erfolgt.

Die erfindungsgemäßen thermoplastischen Massen lassen sich nach den für die Thermoplasten-Verarbeitung üblichen Verfahren, wie z. B. Extrusion und Spritzgießen, zu unterschiedlichen Formkörpern, wie z. B. Möbeln für den Innen und Außenbereich, Karosserieteilen, Booten, Schildern, Straßenlampenabdeckungen und Kindermöbeln verarbeiten.

Die Erfindung wird durch die Beispiele und Ansprüche näher erläutert.

Beispiele

Zu den Messmethoden:

Der E-Modul wird nach ISO 527-2:1993 bestimmt.

Die mittlere Teilchengröße, definiert durch den d50-Wert der Teilchengrößenverteilung, wird gemessen mit Hilfe der HDC (Hydrodynamische Chromatografie, W. Wohlleben, H. Schuch in "Measurement of Particle Size Distribution of Polymer Latexes", 2010, Editors: L. Gugliotta, J. Vega, p. 130 - 153).

Die Kerbschlagzähigkeit ($kJ/m^2$) wird gemessen nach DIN 53 453 (ISO 179 1eA).

Der MVR (220/10) wird nach ISO 1133 bestimmt.

Zum allgemeinen Herstellen:

Zur Herstellung der Zusammensetzungen wurden die jeweiligen Komponenten in einem Extruder (ZSK 30 Doppelschneckenextruder der Fa. Werner & Pfleiderer) bei einer Temperatur von 240°C innig vermischt.

Das Koagulat des Pfropfpolymers A wurde nach dem Versuch abfiltriert, getrocknet und gewogen. Die Ablagerungen/Belag an den Anlagenteilen (wie z.B. Kesselwand, Rührer) wurde von je 5 Mitarbeitern unabhängig voneinander bewertet.

A) Herstellung des kleinteiligen Pfropfcopolymer (Teilchengröße 100 nm)

Die Herstellung der Pfropfgrundlage A erfolgt analog zu EP-A 0450485 (Pfropfcopolymer A, siehe Seite 7, Zeile 11). Dabei wird das entsprechende Salz (in entsprechender Menge) zunächst in der Vorlage gelöst und anschließend die Polymerisation, wie in EP 0450485 beschrieben, durchgeführt. Zum Vergleich wurde Experiment V6 analog durchgeführt.

Das Acrylat-Pfropfpolymer C und die Hartkomponente B (SAN-Copolymer) werden analog zu EP 0450485 hergestellt. Die Experimente wurden mit 3,2 kg Pfropfkautschuk durchgeführt.

a1) Herstellung der Pfropfgrundlage

Es werden jeweils Gewichtsanteile angegeben. 16 Gew.-Teile Butylacrylat (BA) und 0.4 Gew.-Teile Dihydrodicyclopentadienylacrylat (DCPA) werden in 150 Gew.-Teilen Wasser unter Zusatz von einem Teil des Natriumsalzes einer C12-C18-Paraffinsulfonsäure, 0,3 Gew.-Teilen Kaliumperoxodisulfat und den entsprechend angegebenen Mengen Natriumcarbonat bzw. Natrium-bicarbonat (siehe Tabelle 1) unter Rühren auf 60°C erwärmt. 10 Minuten nach dem Anspringen der Polymerisationsreaktion wurde innerhalb von 3 Stunden eine Mischung aus 82 Gew.-Teilen Butylacrylat und 1.6 Gew.-Teilen DCPA zugegeben. Nach Beendigung der Monomer-Zugabe ließ man noch eine Stunde nachreagieren.

Der erhaltene Kautschuk des vernetzten Butylacrylat-Polymer hatte einen Feststoffgehalt von 40 Gew.-%. Die Teilchengrößenverteilung war eng (Quotient Q = 0,20).

a2) Herstellung des Pfropfcopolymers

4200 g der nach Vorschrift (a1) hergestellten Emulsion wurden mit 2300 g Wasser und 5.4 g Kaliumperoxodisulfat gemischt und unter Rühren auf 65° C erwärmt. Nach Erreichen der Reaktionstemperatur wurde im Laufe von 3 Stunden eine Mischung aus 840 g Styrol und 280 g Acrylnitril dazu dosiert. Nach Beendigung der Zugabe wurde die Emulsion noch 2 Stunden bei 65° C gehalten. Das Pfropfpolymer wurde mittels Calciumchlorid-Lösung bei 95° C aus der Emulsion gefällt, mit Wasser gewaschen und im warmen Luftstrom getrocknet. Die mittleren Teilchengrößen der erhaltenen Pfropfcopolymere sind in Tabelle 1 aufgeführt.

b) Herstellung der entsprechenden Formmassen

Zur Herstellung der thermoplastischen Formmassen werden die vorbeschriebenen teilchenförmigen Pfropfpolymere in eine Hartkomponente, d.h. das SAN-Copolymer (75 : 25), eingearbeitet. Die Einarbeitung kann zum Beispiel dadurch erfolgen, dass das bzw. die teilchenförmigen Pfropfpolymere durch Zugabe eines Elektrolyten aus der Emulsion isoliert (gefällt) wird, und anschließend, gegebenenfalls nach Trocknung, durch gemeinsames Extrudieren, Kneten oder Walzen mit der Hartkomponente (SAN) vermischt wird.

c) Herstellung des großteiligen Pfropfcopolymers C

c1) Herstellung der Pfropfgrundlage

Zu einer Vorlage aus 2,5 Gew.-Teilen des wie in a1) beschrieben hergestellten Kautschuk wurden nach Zugabe von 50 Gew.-Teilen Wasser und 0,1 Gew.-Teilen Kaliumperoxodisulfat im Verlauf von 3 Stunden einerseits eine Mischung aus 49 Gew.-Teilen Butylacrylat und 1 Gew.-Teil DCPA und andererseits eine Lösung von 0,5 Gew.-Teilen des Natriumcarbonat bzw. Natrium-bicarbonat einer $C_{12}$- bis $C_{18}$-Paraffinsulfonsäure in 25 Gew.-Teilen Wasser zugegeben. Dabei betrug die Temperatur der Vorlage 60°C. Nach Zulaufende wurde zwei Stunden nachpolymerisiert. Der erhaltene Kautschuk hatte einen Feststoffgehalt von 40 %. Die mittlere Teilchengröße (Gewichtsmittel) des Kautschuks wurde zu 410 nm ermittelt.

c2) Herstellung des Pfropfcopolymers

150 Gew.-Teile des nach c1) erhaltenen Kautschuk wurden mit 15 Gew.-Teilen Styrol und 60 Gew.-Teilen Wasser gemischt und unter Rühren nach Zusatz von weiteren 0,03 Gew.-Teilen Kaliumperoxodisulfat und 0,05 Gew.-Teilen Lauroylperoxid 3 Stunden auf 65°C erhitzt. Die erhaltene Dispersion wurde mit 25 Gew.-Teilen eines Gemisches aus Styrol und Acrylnitril im Verhältnis 75:25 weitere 4 Stunden polymerisiert, mittels Calciumchlorid-Lösung bei 95°C gefällt, abgetrennt, mit Wasser gewaschen und im warmen Luftstrom getrocknet. Der Pfropfgrad wurde zu 40 % ermittelt.

d) Mischungen mit SAN

Anhand von hergestellten Mischungen aus den gewonnenen Pfropfcopolymeren (Experiment 1, 3 und V6) und einer handelsüblichen Hartkomponente, SAN-Copolymer aus Styrol:Acrylnitril (75:25) wurde ein möglicher Einfluss auf die o.g. mechanischen Eigenschaften der thermoplastischen Formmasse untersucht. Das Gew.-Verhältnis von SAN-Matrix zu Pfropfcopolymer beträgt hier 70:30.

Tabelle 1 - Vergleich von Teilchengröße (nach Pfropf-Reaktion), pH-Wert (am Ende der Reaktion), Koagulatbildung und Belagsbildung unter verschiedenen Bedingungen. Experimente 1 bis 5 variieren die Menge von $Na_2CO_3$ und Experiment V6 wird mit $NaHCO_3$ bei der Reaktion (Rk) gepuffert. Der theoretische Gesamtansatz ist 3.2 kg. Das als Puffer eingesetzte Salz wird als molare Menge, bezogen auf das als Initiator eingesetzte KPS (Pfropfgrundlage und Pfropfhülle gesamt) genannt.

| Experiment | Eingesetztes Salz (molare Menge) | Teilchengröße (nach Pfropf-Rk in nm) | pH - Wert (am Ende der Rk) | Koagulat (g) | Belagsbildung (unabhängige Bewertung) |
|---|---|---|---|---|---|
| 1 | $Na_2CO_3$: 0,1 | 75 | 5,4 | 3,3 | sehr wenig |
| 2 | $Na_2CO_3$: 1,0 | 92 | 7,3 | 5 | wenig |
| 3 | $Na_2CO_3$: 1,25 | 98 | 7,5 | 5 | wenig |
| 4 | $Na_2CO_3$: 1,9 | 114 | 7,8 | 5 | wenig |
| 5 | $Na_2CO_3$: 2,5 | 132 | 8,1 | 5 | wenig |
| | | | | | |
| V6 | $NaHCO_3$: 2,0 | 99 | 7,5 | 23 | sehr stark |

Wie in Tabelle 1 zu sehen ist, ist sowohl die Koagulatbildung als auch die Belagsbildung im Reaktionskessel mit einer $Na_2CO_3$ Menge von 0,1 (molare Menge bezogen auf KPS gesamt) bei der Pfropf-Polymerisation am geringsten, verändert sich jedoch nicht sehr bei einer $Na_2CO_3$ Menge zwischen 1,0 und 2,5.

Experiment V6 zeigt hingegen eine hohe Koagulatbildung sowie eine starke Belagsbildung im Reaktionskessel bei Einsatz von $NaHCO_3$.

Um nach der Pfropfungs-Reaktion eine Teilchengröße von ca. 100 nm zu erhalten, werden vorzugsweise lediglich 1.25 mol $Na_2CO_3$, bezogen auf KPS, benötigt anstelle von 2.0 mol $NaHCO_3$ bezogen auf KPS. Somit wird eine geringere Puffersalzmenge bei gleicher Teilchengröße der Pfropfpolymer-Partikel benötigt.

Tabelle 2 - Vergleich von Teilchengröße ($D_{50}$ nach Pfropf-Reaktion), pH-Wert (am Ende der Reaktion), Koagulatbildung und Belagsbildung an der Wandung unter verschiedenen Bedingungen.

| Die Experimente 7 bis 13 variieren die molare Menge von $Na_2CO_3$ (bezogen auf KPSgesamt) und das Experiment V14 zeigt die Ergebnisse bei einer mit $NaHCO_3$ gepufferten Reaktion. Der theoretische Gesamtansatz ist 3.2 kg. | | | | | |
|---|---|---|---|---|---|
| | $Na_2CO_3$-mol. Menge bezogen auf $KPS_{gesamt}$ | pH-Wert (am Ende der Reaktion) | HDC ($D_{50}$) | Koagulat getrocknet (gewogen) | Belagsbildung an Wandung |
| | | | | g | |
| 7 | 0,1 | 4,3 | 572 | 1,2 | sehr wenig |
| 8 | 0,5 | 7,1 | 571 | 1 | sehr wenig |
| 9 | 1 | 7,5 | 567 | 1,5 | sehr wenig |
| 10 | 1,25 | 7,6 | 592 | 2 | sehr wenig |
| 11 | 1,5 | 7,9 | 654 | 1,8 | sehr wenig |
| 12 | 2 | 8,2 | 817 | 2,1 | sehr wenig |
| 13 | 2,5 | 8,3 | 964 | 7,4 | wenig |
| | | | | | |
| Vergleich $NaHCO_3$ statt $Na_2CO_3$ | | | | | |
| V14 | 2 | 7,7 | 666 | 16,8 | stark |

Tabelle 3 - Vergleich der mechanischen Eigenschaften und der Verarbeitbarkeit der mit SAN (75 : 25) abgemischten Pfropfcopolymer-Produkte aus den Experimenten 1 (geringe Menge Natriumcarbonat), 3 (größere Menge Natriumcarbonat) und V6 (größere Menge Natriumhydrogencarbonat).

| Kautschuk aus Experiment | MVR (220/10) | E-Modul (MPa) | Kerbschlagzähigkeit Ak [kJ/m$^2$], 23°C |
|---|---|---|---|
| 1 | 5,5 | 2521 | 3,48 |
| 3 | 5,4 | 2495 | 3,83 |
| V6 | 5,8 | 2529 | 3,19 |

Aus Tabelle 3 geht hervor, dass die mechanischen Eigenschaften der mit SAN hergestellten Formteile unter Einsatz der mit $Na_2CO_3$ gepufferten Pfropfcopolymere nicht negativ beeinträchtigt werden. So ändern sich MVR (melt flow rate) und E-Modul im Rahmen von Messfehlern im Vergleich zum Vergleichs-Experiment V6 nicht, die Kerbschlagzähigkeit wird verbessert.

**Patentansprüche**

**1.** Verfahren zur Herstellung einer thermoplastischen Formmasse enthaltend :

10 bis 40 Gew.-% mindestens eines Pfropfcopolymers A, enthaltend 50 bis 70 Gew.-%, bezogen auf A, einer Pfropfgrundlage A1 aus einem elastomeren, vernetzten Acrylester-Polymer und
30 bis 50 Gew.-%, bezogen auf A, einer Pfropfhülle A2 aus einem vinylaromatischen Monomer und einem polaren, copolymerisierbaren, ethylenisch ungesättigten Monomeren, im Gewichtsverhältnis 80 : 20 bis 65 : 35,

50 bis 90 Gew.-% einer Hartmatrix B aus einem oder mehreren Copolymeren von Styrol, $\alpha$-Methylstyrol, Acrylnitril, Methylmethacrylat und/oder Phenylmaleinimid,

0 bis 50 Gew.-% eines weiteren, zum Pfropfcopolymer A unterschiedlichen Pfropfcopolymers C mit einem mittleren Teilchendurchmesser (Gewichtsmittel) im Bereich von 200 bis 800 nm, enthaltend

50 bis 80 Gew.-%, bezogen auf C, eines von A1 verschiedenen, elastomeren vernetzten Acrylester-Polymers C1, 2,5 bis 25 Gew.-%, bezogen auf C, einer ersten Pfropfhülle C2 aus einem vinylaromatischen Monomeren und aus 10 bis 45 Gew.-%, bezogen auf C, einer zweiten Pfropfhülle C3 aus einer Mischung aus einem vinylaromatischen Monomeren C31 und einem polaren, copolymerisierbaren, ethylenisch ungesättigten Monomeren C32 im Gewichtsverhältnis von C31 zu C32 von 90 : 10 bis 60 : 40 und

0 bis 15 Gew.-% eines oder mehrerer Additive D,

wobei die Summe aus A und B, und gegebenenfalls C und D 100 Gew.-% ergibt, und wobei die Reaktion zur Herstellung des Acrylester-Polymers A und die Reaktion zur Herstellung des Copolymers C in Gegenwart einer 0,01 bis 4-fach molaren Menge an Natriumcarbonat, bezogen auf die Summe der bei der Herstellung der Pfropfgrundlage und Pfropfhülle eingesetzten molaren Menge an Initiator, insbesondere KPS, durchgeführt wird.

2. Verfahren zur Herstellung einer thermoplastischen Formmasse gemäß Anspruch 1, wobei die Pfropfgrundlage A1 aus 55 bis 65 Gew.-%, bezogen auf A, aus AcrylatPolymer-Partikeln mit einer mittleren Teilchengröße von 50 bis 120 nm, und die Pfropfhülle A2 aus 35 bis 45 Gew.-%, bezogen auf A, aus Styrol und Acrylnitril besteht.

3. Verfahren zur Herstellung einer thermoplastischen Formmasse gemäß einem der Ansprüche 1 oder 2, wobei die Teilchengrößenverteilung der Pfropfgrundlage A1 Q von 0,01 bis 0,5 insbesondere Q von 0,1 bis 0,4 beträgt.

4. Verfahren zur Herstellung einer thermoplastischen Formmasse gemäß einem der Ansprüche 1 bis 3, wobei die mittlere Teilchengröße der Partikel der Komponente A nach der Pfropf-Reaktion im Bereich von 70 bis 150 nm liegt.

5. Verfahren zur Herstellung einer thermoplastischen Formmasse gemäß einem der Ansprüche 1 bis 4, wobei die Koagulatbildung der Pfropfhülle A2 in einem Bereich zwischen 0,01 bis 0,5 Gew.-%, bezogen auf das Gesamtgewicht des Pfropfcopolymers, liegt.

6. Verfahren zur Herstellung einer thermoplastischen Formmasse gemäß einem der Ansprüche 1 bis 5, wobei das Natriumcarbonat bei der Herstellung der Pfropfcopolymere A und/oder C in einer Menge von 0,01 bis 2,5 Mol, insbesondere 0,1 bis 2,5 Mol, bezogen auf die Summer der molaren Mengen der in der Pfropfgrundlage und Pfropfhülle eingesetzten Menge an Initiator, insbesondere KPS, verwendet wird.

7. Verfahren zur Herstellung einer thermoplastischen Formmasse gemäß einem der Ansprüche 1 bis 6, wobei die Formmasse 1 bis 50 Gew.-% mindestens eines zum Pfropfcopolymer A unterschiedlichen Pfropfcopolymers C enthält.

8. Verfahren zur Herstellung einer thermoplastischen Formmasse gemäß einem der Ansprüche 1 bis 7, wobei die Formmasse 0,1 bis 15 Gew.-%, insbesondere 0,1 bis 5 Gew.-% mindestens eines Additivs D enthält.

9. Verfahren zur Herstellung einer thermoplastischen Formmasse gemäß einem der Ansprüche 1 bis 8, wobei die Formmasse 1 bis 50 Gew.-% mindestens eines Pfropfcopolymers C enthält und die mittlere Teilchengröße der Partikel der Komponente C nach der Pfropf-Reaktion im Bereich von 300 bis 700 nm liegt.

10. Verfahren zur Herstellung einer thermoplastischen Formmasse gemäß einem der Ansprüche 1 bis 9, wobei die entsprechende Menge an Natriumcarbonat zunächst in einer Vorlage gelöst und dann zur Polymerisation zugeführt wird.

11. Verfahren zur Herstellung einer thermoplastischen Formmasse gemäß einem der Ansprüche 1 bis 10, wobei während der Pfropfcopolymerisation eine Natriumcarbonat-Lösung zusammen mit einer KPS-Lösung kontinuierlich zugegeben wird.

12. Verfahren zur Herstellung einer thermoplastischen Formmasse enthaltend :

50 bis 90 Gew.-% einer Hartmatrix B aus einem oder mehreren Copolymeren von Styrol, $\alpha$-Methylstyrol, Acrylnitril, Methylmethacrylat und/oder Phenylmaleinimid,

10 bis 50 Gew.-% eines Pfropfcopolymers C mit einer mittleren Teilchengröße (Gewichtsmittel) im Bereich von 200 bis 800 nm, enthaltend 50 bis 80 Gew.-%, bezogen auf C, eines elastomeren vernetzten Acrylester-Polymers C1,

2,5 bis 25 Gew.-%, bezogen auf C, einer ersten Pfropfhülle C2 aus einem vinylaromatischen Monomeren und aus 10 bis 45 Gew.-%, bezogen auf C, einer zweiten Pfropfhülle C3 aus einer Mischung aus einem vinylaromatischen Monomeren C31 und einem polaren, copolymerisierbaren, ethylenisch ungesättigten Monomeren C32, im Gewichtsverhältnis von C31 zu C32 von 90 : 10 bis 60 : 40 und

0 bis 15 Gew.-%, insbesondere 0,1 bis 5 Gew.-%, eines oder mehrerer Additive D,

wobei die Summe aus B und C, und gegebenenfalls D, 100 Gew.-% ergibt, und wobei die Reaktion zur Herstellung des Acrylester-Polymers C in Gegenwart einer 0,01 bis 4-fach, insbesondere 0,1 bis 2,5-fach molaren Menge Natriumcarbonat, bezogen auf die Summe der bei der Herstellung der Pfropfgrundlage und Pfropfhülle von C eingesetzten molaren Menge an Initiator, insbesondere KPS, durchgeführt wird.

13. Verfahren zur Herstellung einer thermoplastischen Formmasse gemäß Anspruch 12, wobei die Koagulat-Bildung der Pfropfhülle von Komponente C in einem Bereich zwischen 0,01 bis 0,5 Gew.-%, bezogen auf das Gesamtgewicht des Pfropfcopolymers C liegt.

14. Verwendung der gemäß einem der Ansprüche 1 bis 11 oder gemäß einem der Ansprüche 12 bis 13 erhaltenen thermoplastischen Formmasse zur Herstellung von Formkörpern, Folien oder Beschichtungen.

15. Formkörper, Folien und Beschichtungen aus einer thermoplastischen Formmasse, hergestellt nach einem Verfahren gemäß einem der Ansprüche 1 bis 11 oder gemäß einem der Ansprüche 12 bis 13.

**Claims**

1. A process for the production of a thermoplastic molding composition comprising:

   from 10 to 40% by weight of at least one graft copolymer A comprising from 50 to 70% by weight, based on A, of a graft base A1 made of an elastomeric, crosslinked acrylate polymer and
   from 30 to 50% by weight, based on A, of a graft shell A2 made of a vinylaromatic monomer and of a polar, copolymerizable, ethylenically unsaturated monomer, in a ratio by weight of from 80:20 to 65:35,
   from 50 to 90% by weight of a hard matrix B made of one or more copolymers of styrene, $\alpha$-methylstyrene, acrylonitrile, methyl methacrylate, and/or phenylmaleimide,
   from 0 to 50% by weight of another graft copolymer C which differs from the graft copolymer A and which has an average particle diameter (weight average) in the range from 200 to 800 nm, comprising
   from 50 to 80% by weight, based on C, of an elastomeric crosslinked acrylate polymer C1 which differs from A1,
   from 2.5 to 25% by weight, based on C, of a first graft shell C2 made of a vinylaromatic monomer and of from 10 to 45% by weight, based on C, of a second graft shell C3 made of a mixture of a vinylaromatic monomer C31 and of a polar, copolymerizable, ethylenically unsaturated monomer C32, where the ratio by weight of C31 to C32 is from 90:10 to 60:40, and
   from 0 to 15% by weight of one or more additives D,

   where the entirety of A and B, and optionally C and D, gives 100% by weight, and where the reaction for the production of the acrylate polymer A and the reaction for the production of the copolymer C is carried out in the presence of a molar quantity of sodium carbonate which is from 0.01 to 4 times the total molar quantity of initiator, in particular PPS, used in the production of the graft base and graft shell.

2. The process for the production of a thermoplastic molding composition as claimed in claim 1, where the graft base A1 is composed of from 55 to 65% by weight, based on A, of acrylate polymer particles with average size from 50 to 120 nm and the graft shell A2 is composed of from 35 to 45% by weight, based on A, of styrene and acrylonitrile.

3. The process for the production of a thermoplastic molding composition as claimed in claim 1 or 2, where the particle size distribution factor Q of the graft base A1 is from 0.01 to 0.5, in particular from 0.1 to 0.4.

4. The process for the production of a thermoplastic molding composition as claimed in any of claims 1 to 3, where the average size of the particles of component A after the graft reaction is in the range from 70 to 150 nm.

5. The process for the production of a thermoplastic molding composition as claimed in any of claims 1 to 4, where the quantity of coagulate formed in connection with the graft shell A2 is in the range from 0.01 to 0.5% by weight, based on the total weight of the graft copolymer.

6. The process for the production of a thermoplastic molding composition as claimed in any of claims 1 to 5, where the quantity of sodium carbonate used in the production of the graft copolymers A and/or C is from 0.01 to 2.5 mol, in particular from 0.1 to 2.5 mol, based on the sum of the molar quantities of initiator, in particular PPS, used in the graft base and graft shell.

7. The process for the production of a thermoplastic molding composition as claimed in any of claims 1 to 6, where the molding composition comprises from 1 to 50% by weight of at least one graft copolymer C which differs from the graft copolymer A.

8. The process for the production of a thermoplastic molding composition as claimed in any of claims 1 to 7, where the molding composition comprises from 0.1 to 15% by weight, in particular from 0.1 to 5% by weight, of at least one additive D.

9. The process for the production of a thermoplastic molding composition as claimed in any of claims 1 to 8, where the molding composition comprises from 1 to 50% by weight of at least one graft copolymer C and the average size of the particles of component C after the graft reaction is in the range from 300 to 700 nm.

10. The process for the production of a thermoplastic molding composition as claimed in any of claims 1 to 9, where the appropriate quantity of sodium carbonate is first dissolved in a starting material and then is introduced into the polymerization.

11. The process for the production of a thermoplastic molding composition as claimed in any of claims 1 to 10, where a sodium carbonate solution is added together with a PPS solution continuously during the graft copolymerization.

12. The process for the production of a thermoplastic molding composition comprising:

from 50 to 90% by weight of a hard matrix B made of one or more copolymers of styrene, $\alpha$-methylstyrene, acrylonitrile, methyl methacrylate, and/or phenylmaleimide,
from 10 to 50% by weight of a graft copolymer C with an average particle size (weight average) in the range from 200 to 800 nm, comprising from 50 to 80% by weight, based on C, of an elastomeric crosslinked acrylate polymer C1,
from 2.5 to 25% by weight, based on C, of a first graft shell C2 made of a vinylaromatic monomer and of from 10 to 45% by weight, based on C, of a second graft shell C3 made of a mixture of a vinylaromatic monomer C31 and of a polar, copolymerizable, ethylenically unsaturated monomer C32, where the ratio by weight of C31 to C32 is from 90:10 to 60:40, and
from 0 to 15% by weight, in particular from 0.1 to 5% by weight, of one or more additives D,

where the entirety of B and C, and optionally D, gives 100% by weight, and where the reaction for the production of the acrylate polymer C is carried out in the presence of a molar quantity of sodium carbonate which is from 0.01 to 4 times, in particular from 0.1 to 2.5 times, the total molar quantity of initiator, in particular PPS, used in the production of the graft base and graft shell of C.

13. The process for the production of a thermoplastic molding composition as claimed in claim 12, where the coagulate formation of the graft shell of component C is in the range from 0.01 to 0.5% by weight, based on the total weight of the graft copolymer C.

14. The use, for the production of moldings, films, or coatings of the thermoplastic molding composition obtained as claimed in any of claims 1 to 11 or as claimed in claim 12 or 13.

15. A molding, a film, or a coating made of a thermoplastic molding composition produced by the process as claimed in any of claims 1 to 11 or as claimed in claim 12 or 13.

**Revendications**

1. Procédé de fabrication d'un mélange à mouler thermoplastique, contenant

   10 à 40 % en poids d'au moins un copolymère greffé A, contenant

   50 à 70 % en poids, par rapport à A, d'une base de greffage A1 constituée d'un polymère d'un ester de l'acide acrylique réticulé élastomère, et
   30 à 50 % en poids, par rapport à A, d'une enveloppe de greffage A2 constituée d'un monomère vinylaromatique et d'un monomère polaire copolymérisable à insaturation éthylénique, selon un rapport de mélange de 80:20 à 65:35,

   50 à 90 % en poids d'une matrice dure B constituée d'un ou plusieurs copolymères de styrène, d'a-méthylstyrène, d'acrylonitrile, de méthacrylate de méthyle et/ou de phénylmaléimide,
   0 à 50 % en poids d'un copolymère greffé C supplémentaire, différent du copolymère greffé A, présentant une granulométrie moyenne (moyenne en poids) comprise dans la plage de 200 à 800 nm, contenant

   50 à 80 % en poids, par rapport à C, d'un polymère d'un ester de l'acide acrylique C1, réticulé, élastomère, différent de A1,
   2,5 à 25 % en poids, par rapport à C, d'une première enveloppe de greffage C2 constituée d'un monomère vinylaromatique et de 10 à 45 % en poids, par rapport à C, d'une deuxième enveloppe de greffage C3 constituée d'un mélange d'un monomère vinylaromatique C31 et d'un monomère polaire copolymérisable à insaturation éthylénique C32, selon un rapport en poids de C31 à C32 de 90:10 à 60:40, et

   0 à 15 % en poids d'un ou plusieurs additifs D,

   la somme de A et B, et éventuellement de C et D, étant de 100 % en poids, et
   la réaction de fabrication du polymère d'un ester acrylique A et la réaction de fabrication du copolymère C étant mises en oeuvre en présence d'une quantité 0,01 à 4 fois molaire de carbonate de sodium, par rapport à la somme de la quantité en moles d'amorceur, en particulier le KPS, utilisée lors de la fabrication de la base de greffage et de l'enveloppe de greffage.

2. Procédé de fabrication d'un mélange à mouler thermoplastique selon la revendication 1, dans lequel la base de greffage A1 est constituée de 55 à 65 % en poids, par rapport à A, de particules d'un polymère d'acrylate ayant une granulométrie moyenne de 50 à 120 nm, et l'enveloppe de greffage A2 est constituée de 35 à 45 % en poids, par rapport à A, de styrène et d'acrylonitrile.

3. Procédé de fabrication d'un mélange à mouler thermoplastique selon l'une des revendications 1 ou 2, dans lequel la distribution granulométrique de la base de greffage A1 correspond à un Q de 0,01 à 0,5, en particulier à un Q de 0,1 à 0,4.

4. Procédé de fabrication d'un mélange à mouler thermoplastique selon l'une des revendications 1 à 3, dans lequel la granulométrie moyenne des particules du composant A après la réaction de greffage est comprise dans la plage de 70 à 150 nm.

5. Procédé de fabrication d'un mélange à mouler thermoplastique selon l'une des revendications 1 à 4, dans lequel la formation d'un coagulat de l'enveloppe de greffage A2 est comprise dans la plage de 0,01 à 0,5 % en poids, par rapport au poids total du copolymère greffé.

6. Procédé de fabrication d'un mélange à mouler thermoplastique selon l'une des revendications 1 à 5, dans lequel le carbonate de sodium, lors de la fabrication des copolymères greffés A et/ou C, est utilisé en une quantité de 0,01 à 2,5 moles, en particulier de 0,1 à 2,5 moles, par rapport à la somme des quantités molaires de la quantité d'amorceur, en particulier le KPS, utilisée dans la base de greffage et dans l'enveloppe de greffage.

7. Procédé de fabrication d'un mélange à mouler thermoplastique selon l'une des revendications 1 à 6, dans lequel le mélange à mouler contient 1 à 50 % en poids d'au moins un copolymère greffé C différent du copolymère greffé A.

8. Procédé de fabrication d'un mélange à mouler thermoplastique selon l'une des revendications 1 à 7, dans lequel le mélange à mouler contient 0,1 à 15 % en poids, en particulier 0,1 à 5 % en poids d'au moins un additif D.

9. Procédé de fabrication d'un mélange à mouler thermoplastique selon l'une des revendications 1 à 8, dans lequel le mélange à mouler contient 1 à 50 % en poids d'au moins un copolymère greffé C, et la granulométrie moyenne des particules du composant C après la réaction de greffage est comprise dans la plage de 300 à 700 nm.

10. Procédé de fabrication d'un mélange à mouler thermoplastique selon l'une des revendications 1 à 9, dans lequel la quantité correspondante de carbonate de sodium est d'abord dissoute dans un ballon, puis amenée à la polymérisation.

11. Procédé de fabrication d'un mélange à mouler thermoplastique selon l'une des revendications 1 à 10, dans lequel, pendant la polymérisation par greffage, on ajoute en continu une solution de carbonate de sodium en même temps qu'une solution de KPS.

12. Procédé de fabrication d'un mélange à mouler thermoplastique, contenant

50 à 90 % en poids d'une matrice dure B constituée d'un ou plusieurs copolymères de styrène, d'a-méthylstyrène, d'acrylonitrile, de méthacrylate de méthyle et/ou de phénylmaléimide,
10 à 50 % en poids d'un copolymère greffé C ayant une granulométrie moyenne (moyenne en poids) comprise dans la plage de 200 à 800 nm, contenant

50 à 80 % en poids, par rapport à C, d'un polymère d'un ester de l'acide acrylique réticulé élastomère C1,
2,5 à 25 % en poids, par rapport à C, d'une première enveloppe de greffage
C2 constituée d'un monomère vinylaromatique et de 10 à 45 % en poids, par rapport à C, d'une deuxième enveloppe de greffage C3 constituée d'un mélange d'un monomère vinylaromatique C31 et d'un monomère polaire copolymérisable à insaturation éthylénique C32, selon un rapport en poids de C31 à C32 de 90:10 à 60:40, et

0 à 15 % en poids, en particulier 0,1 à 5 % en poids, d'un ou plusieurs additifs D,

dans lequel la somme de B et de C, et éventuellement de D, est de 100 % en poids, et
dans lequel la réaction de fabrication du polymère d'un ester de l'acide acrylique C est mise en oeuvre en présence d'une quantité 0,01 à 4 fois, en particulier 0,1 à 2,5 fois molaire de carbonate de sodium, par rapport à la somme de la quantité molaire d'amorceur, en particulier le KPS, utilisée lors de la fabrication de la base de greffage et de l'enveloppe de greffage de C.

13. Procédé de fabrication d'un mélange à mouler thermoplastique selon la revendication 12, dans lequel la formation d'un coagulat de l'enveloppe de greffage du composant C est comprise dans la plage de 0,01 à 0,5 % en poids, par rapport au poids total du copolymère greffé C.

14. Utilisation du mélange à mouler thermoplastique obtenu selon l'une des revendications 1 à 11 ou selon l'une des revendications 12 à 13 pour la fabrication d'objets moulés, de feuilles ou de revêtements.

15. Objets moulés, feuilles et revêtements constitués d'un mélange à mouler thermoplastique fabriqué par un procédé selon l'une des revendications 1 à 11 ou selon l'une des revendications 12 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8440764 B, Styrolution
- EP 0450485 A
- DE 19503545
- DE 3149358
- US 20110275763 A
- WO 2007142473 A
- EP 0139971 A2
- DE 1260935
- DE 1911882
- EP 0363608 A


**In der Beschreibung aufgeführte Nicht-Patentliteratur**

- Vieweg-Daumiller, Band V Polystyrol. Carl-Hanser-Verlag, 1969, 124
- **PALMA et al.** *Indian J. Chem. Technol.,* 2007, vol. 14 (5), 515
- **ZUBITUR et al.** *Polymer,* 2001, vol. 42 (14), 5979
- Ulmann's Encyclopedia of Industrial Chemistry. VCH-Verlag, 1992, vol. 5, 633 f
- Vieweg-Daumiller, Band V Polystyrol. Kunststoff-Handbuch. Carl-Hanser-Verlag, 1969, vol. V, 124
- *Journal of Applied Polymer Science,* 1965, vol. 9, 2929-2938
- Measurement of Particle Size Distribution of Polymer Latexes. **W. WOHLLEBEN ; H. SCHUCH.** Hydrodynamische Chromatografie. 2010, 130-153